Europäisches Patentamt

European Patent Office

Office européen des brevets

(11) Veröffentlichungsnummer: **0 236 726**
**A2**

## (12) EUROPÄISCHE PATENTANMELDUNG

(21) Anmeldenummer: **87101434.6**

(51) Int. Cl.⁴: **B60R 13/06**

(22) Anmeldetag: **03.02.87**

(30) Priorität: **24.02.86 DE 3605863**

(43) Veröffentlichungstag der Anmeldung:
**16.09.87 Patentblatt 87/38**

(84) Benannte Vertragsstaaten:
**DE FR GB IT**

(71) Anmelder: **VDO Adolf Schindling AG**
**Gräfstrasse 103**
**D-6000 Frankfurt/Main(DE)**

(72) Erfinder: **Wipfler, Alfred**
**Friedrichstrasse 10 a**
**D-6239 Kriftel(DE)**
Erfinder: **Stier, Bernhard**
**Schwarzwaldstrasse 17**
**D-6233 Kelkheim-Fischbach(DE)**

(74) Vertreter: **Klein, Thomas, Dipl.-Ing. (FH)**
**Sodener Strasse 9 Postfach 6140**
**D-6231 Schwalbach a. Ts.(DE)**

(54) **Abdichtung für verschliessbare Öffnungen von vorzugsweise Fahrzeugen.**

(57) Es wird eine Abdichtung wie Schlauchdichtung - (40) vorgeschlagen, die z. B. im Türrahmen (42) einer Kraftfahrzeugkarosserie eingelassen ist. Die Schlauchdichtung (14) weist zumindest einen in ihre Längsrichtung verlaufenden Hohlraum (38) auf, der in Abhängigkeit von der Stellung der Tür (44) zu dem Kraftfahrzeug mit unterschiedlichen Drucken beaufschlagbar ist. Dabei ist zumindest beim Öffnen bzw. Schließen der Tür (44) der Innendruck des Hohlraums (38) kleiner als der der Umgebung. Ist die Öffnung von der Tür (44) verschlossen, so wird der Hohlraum (38) mit einem Überdruck beaufschlagt, um eine erhöhte Abdichtung hervorzurufen.

FIG.4

EP 0 236 726 A2

## Abdichtung für verschließbare Öffnungen von vorzugsweise Fahrzeugen

Die Erfindung bezieht sich auf eine Abdichtung wie Dichtleiste oder Schlauchdichtung mit Hohlraum für verschließbare Öffnungen von vorzugsweise Fahrzeugen.

Tür-oder Fensteröffnungen von Kraftfahrzeugen weisen eine umlaufende Abdichtung wie Schlauchdichtung auf, um ein dichtes Verschließen zu ermöglichen. Dabei muß die Abdichtung so ausgebildet sein, daß Karosserieverwindungen und Relativbewegungen zwischen dem Verschlußelement und der Karosserie ohne Beeinflussung der Abdichtung ausgeglichen werden. Entsprechende Dichtleisten oder Schlauchdichtungen bestehen dabei vorzugsweise aus Gummi oder Kunststoff und weisen zumindest einen in ihrer Längsrichtung verlaufenden Hohlraum auf, durch den eine Anpassung an die gegeneinander abzudichtenden Elemente wie Kraftfahrzeugrahmen und Tür bzw. Fenster erfolgt.

Insbesondere die Abdichtungen für Türen - seien es Seiten-oder Hecktüren-müssen erhebliche Abstandsänderungen ausgleichen. Dabei muß sichergestellt sein, daß die Tür unter keinen denkbaren Umständen unmittelbar die Kraftfahrzeugkarosserie berührt. Daher sind insbesondere beim Verschließen einer Tür erhebliche Kräfte erforderlich, um die Dichtleisten zusammenzudrücken und die Tür in ein Schloß einrasten zu lassen. Dies ist insbesondere bei Hecktüren von großem Nachteil, bei denen das Schließen mittels pneumatischer Schließhilfen erleichtert werden soll.

Aufgabe der vorliegenden Erfindung ist es, eine Abdichtung wie Dichtleiste oder Schlauchdichtung insbesondere für verschließbare Öffnungen eines Kraftfahrzeuges derart auszubilden, daß eine Querschnittsanpassung an die gegeneinander abzudichtenden Elemente in Abhängigkeit von deren Beanspruchung erfolgen kann.

Die Aufgabe wird im wesentlichen dadurch gelöst, daß der Druck in dem Hohlraum im gewünschten Umfang einstellbar ist. Hierdurch ist die Möglichkeit gegeben, problemlos den Querschnitt der Abdichtung wie Schlauchdichtung zu verändern, so daß eine mehr oder weniger große Kraft zwischen den abzudichtenden Elementen wie z.B. Kraftfahrzeugtür-Kraftfahrzeugrahmen erzeugbar ist, wodurch zum einen das Schließen bzw. das Öffnen der Tür erleichtert und zum anderen bei hohen Beanspruchungen eine sichere Abdichtung gewährleistet ist, die weder zu unerwünschten Geräuschbildungen führt noch die Gefahr in sich birgt, daß z.B. Wasser in das Kraftfahrzeuginnere gelangen kann.

Vorzugsweise ist der Druck $p_{i1}$ in dem Hohlraum während des Verschließens oder des Öffnens der Wagen kleiner als der atmosphärische Druch also der Außendruck, so daß die Tür mit geringer Kraft geöffnet bzw. zugezogen werden kann. Dies ist insbesondere für Verschlußmechanismen von Vorteil, bei denen die Tür mittels einer Schließhilfe pneumatisch zugezogen wird. Sofern die Tür geschlossen ist, ohne daß der Kraftfahrzeugmotor läuft, wird der Unterdruck in der Abdichtung aufgehoben, so daß der Zwischenraum zwischen Öffnung und Verschlußelement wie Tür im erforderlichen Umfang abgedichtet ist. Demzufolge kann z.B. Regen in das Fahrzeuginnere nicht gelangen. Läuft der Kraftfahrzeugmotor bei geschlossener Tür, so wird in besonders hervorzuhebender Ausgestaltung der Erfindung der Hohlraum mit einem Druck $P_{i3}$ beaufschlagt, der in etwa $0,1 \times 10^5 Pa$ bis $0,3 \times 10^5 Pa$ vorzugsweise in etwa $0,2 \times 10^5 Pa$ gegenüber dem Außen-also atmosphärischen Druck liegt. Hierdurch ist nicht nur eine erhöhte Abdichtung gewährleistet, sondern gleichzeitig sichergestellt, daß unerwünschte Fahrgeräusche nicht auftreten.

Aber nicht nur im Bereich von Kraftfahrzeugtüren sind die Abdichtungen erfindungsgemäß auszubilden. Insbesondere auch bei aerodynamisch günstig ausgebildeten Kraftfahrzeugen, bei denen die Fenster fluchtend zur Karosserieaußenfläche angeordnet und von einem umlaufenden Dichtelement wie Dichtleiste oder Schlauchdichtung aufgenommen sind, läßt sich die erfindungsgemäße Lehre vorteilhaft realisieren. So ist insbesondere bei hohen Geschwindigkeiten festzustellen, daß die Fenster nach außen gedrückt werden, wodurch Geräusche und gegebenenfalls Undichtigkeiten auftreten. Werden die Fenster jedoch von erfindungsgemäß ausgebildeten Abdichtungen mit in deren Längsrichtung verlaufendem Hohlraum, der mit einem Druck beaufschlagbar ist, aufgenommen, so ist ein sicheres Halten der Fenster gewährleistet, so daß auch bei hoher Geschwindigkeit eine Relativbewegung zur Karosserie nur im vernachlässigbaren Umfang auftritt, durch die jedoch weder die Dichtigkeit beeinträchtigt noch eine störende Geräuschbildung verursacht wird.

Weitere Einzelheiten, Vorteile und Merkmale der Erfindung ergeben sich nicht nur aus den Ansprüchen, sondern auch aus der nachfolgenden Beschreibung von in der Zeichnung dargestellten bevorzugten Ausführungsbeispielen.

Es zeigen:

Fig. 1 eine Schnittdarstellung durch eine Schlauchdichtung,

Fig. 2 im Ausschnitt eine Anordnung einer Dichtleiste zwischen Kraftfahrzeugkarosserie und Kraftfahrzeugtür,

Fig. 3 einen Ausschnitt eines in einem Kraftfahrzeug eingelassenen Fensters,

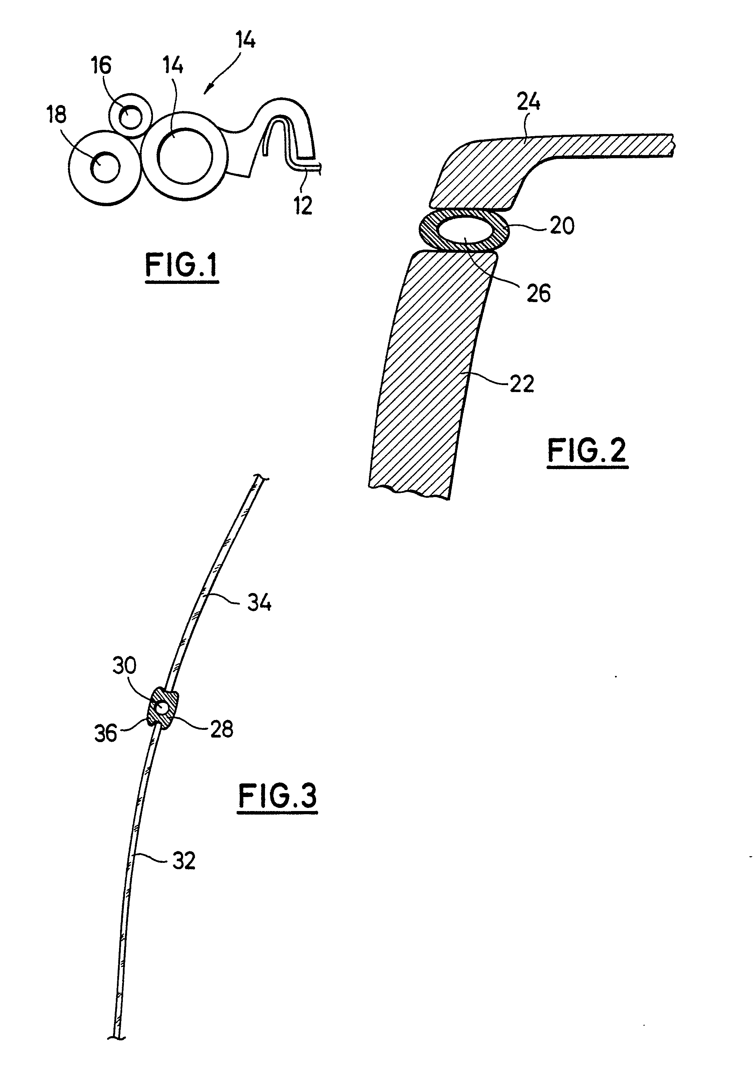

Fig. 3 -7 Ausschnitte einer ein Kraftfahrzeug verschließbaren Tür zu verschiedenen Zeitpunkten.

In Fig. 1 ist eine Schnittdarstellung einer z. B. in einem Rahmen einer Kraftfahrzeugtür vorhandenen Abdichtung in Form einer Schlauchdichtung 10 dargestellt, die von einer von dem Kraftfahrzeug ausgehenden U-förmig geformten Leiste 12 aufgenommen ist. Im Ausführungsbeispiel weist die Schlauchdichtung 10 insgesamt drei sich in ihrer Längsrichtung erstreckende Hohlräume 14, 16, 18 auf. Selbstverständlich können entsprechende Abdichtungen auch nur einen Hohlraum oder auch mehr als drei Hohlräume aufweisen. Dies hängt davon ab, in welchem Umfang die Abdichtung verformt werden soll.

Erfindungsgemäß ist zumindest ein Hohlraum - z.B. der Hohlraum 14-mit einer Druckquelle verbunden, um auf diese Weise gegenüber dem Außendruck, also dem atmosphärischen Druck der Umgebung im gewünschten Umfang einen Innendruck einstellen zu können. Dieser kann gleich, geringer oder größer als der Außendruck sein. Der Wert des Innendrucks $p_{ix}$ hängt davon ab, welche Funktion die Abdichtung ausüben soll.

Die Verbindung des mit Druck zu beaufschlagenden Hohlraums 14 und/oder 16 und/oder 18 erfolgt bei im Türrahmen angeordneter Schlauchdichtung 10 von dem B-Holmen des Kraftfahrzeuges aus. Verläuft die Dichtung dagegen in der Tür selbst, so ist die Verbindung von der Scharnierseite her vorzunehmen.

In Fig. 2 ist eine Anwendung einer erfindungsgemäß ausgebildeten Abdichtung in Form einer Schlauchdichtung 20 dargestellt, die zwischen einer Tür 22 und dem Dachbereich 24 eines Kraftfahrzeuges angeordnet ist. Eine entsprechende Konstruktion findet sich bei Kraftfahrzeugen niedrigen $c_w$-Wertes, bei denen auch von üblichen Regenleisten Abstand genommen wird.

Die Schlauchdichtung 20 weist Hohlraum 26 auf, der im gewünschten Umfang mit Druck beaufschlagbar ist, der z.B. über eine Flügelzellenpumpe erzeugbar ist. Dabei ist der Innendruck $P_{i1}$ kleiner als der Außendruck. Vorzugsweise herrscht eine Druckverminderung in der Größenordnung von vorzugsweise 0,2x10⁵ Pa gegenüber dem Außendruck vor, wenn die Tür 22 geöffnet oder geschlossen werden soll. In diesem Fall wird die Türbewegung durch die Schlauchdichtung 20 nicht behindert. Ist die Tür 22 in dem Kraftfahrzeugschloß eingerastet, so wird der Unterdruck in dem Hohlraum 26 abgebaut, so daß die Schlauchdichtung 20 eine hinreichende Abdichtung zu dem von dem Dach 24 ausgehenden Türrahmen und der Tür 22 selbst gewährleistet. Regenwasser oder ähnliches kann dann in das Kraftfahrzeuginnere nicht hineindringen. Sobald jedoch der Motor des Kraftfahrzeuges angelassen ist, wird in dem Hohlraum 26 ein Überdruck von vorzugsweise in etwa 0,2x10⁵ Pa gegenüber dem Außendruck erzeugt, wodurch eine erhöhte Abdichtung zwischen dem Rahmen und der Tür 22 hervorgerufen wird. Gleichzeitig wird die Tür 22 von der umlaufenden Schlauchdichtung 20 gegenüber dem Türrahmen gehalten. Dies wird durch die von der Schlauchdichtung 20 in Richtung der Ebene der Tür 22 hervorgerufene Kraftbeaufschlagung hervorgerufen. Hierdurch sind unerwünschte häufig zu Geräuschen führende Vibrationen der Tür 22 ausgeschlossen. Ferner ist die Gefahr einer Zugbildung unterbunden.

In Fig. 3 ist eine erfindungsgemäß ausgebildete Schlauchdichtung 28 mit in deren Längsrichtung verlaufenden Hohlraum 30 dargestellt, durch die ein Fenster 32 in eine Öffnung eines Kraftfahrzeuges festgelegt wird. Die Schlauchdichtung geht dabei von einem Abschnitt 34 des Kraftfahrzeuges aus und nimmt in einer nutenförmigen Aussparung 36 den Rand des Fensters 32 auf. Wird nun der Hohlraum 30 mit einem über dem Außendruck liegenden Druck beaufschlagt, so erfolgt ein sicheres Festlegen der Scheibe 32 in der Karosserieöffnung, so daß die sonst zu beobachtende Tendenz des nach außen Drückens ausgeschlossen ist.

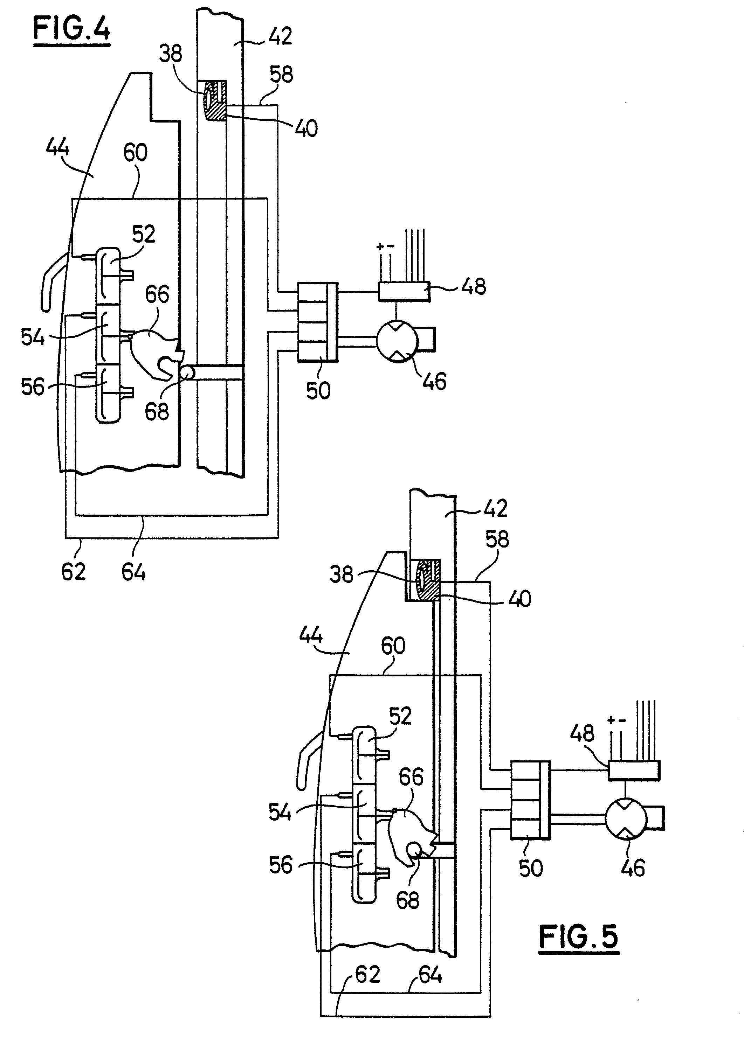

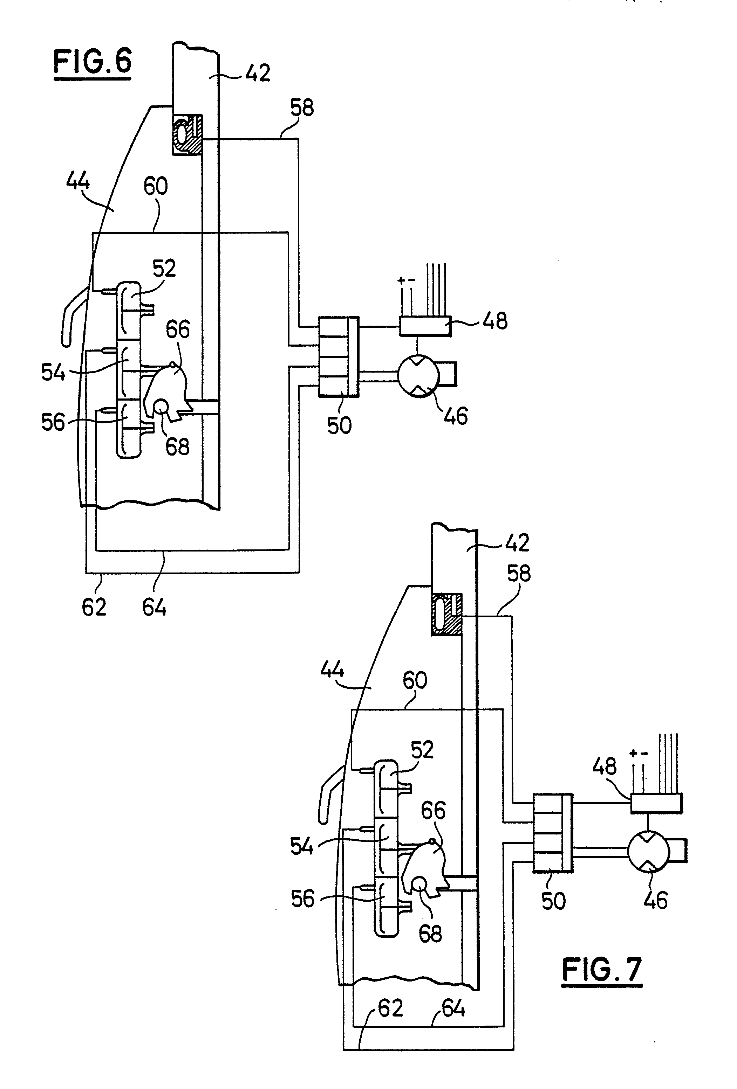

Anhand der Fig. 4 und 6 soll verdeutlicht werden, wie der Innendruck eines Hohlraumes 38 einer erfindungsgemäß ausgebildeten im Rahmen 42 einer Tür 44 eines Kraftfahrzeuges angeordneten Schlauchdichtung 40 variiert wird.

Zum Verständnis ist rein schematisch eine im erwünschten Umfang einen Druck erzeugende Pumpe 46 dargestellt, die über eine Steuerung 48 aktivierbar ist, die ihrerseits Magnetventile 50 betätigt, über die neben dem Hohlraum 38 auch eine Zentralverriegelung 52, eine Schließhilfe 54 und eine Kindersicherung 56 über Leitungen 58, 60, 62 und 64 ansteuerbar sind.

In Fig. 4 befindet sich die Tür 44 in geöffneter Stellung. Damit der Schließvorgang durch die Schlauchdichtung 40 nicht behindert werden kann, wird in dem Hohlraum 38 ein Unterdruck erzeugt, der in etwa 0,2x10⁵ Pa gegenüber dem atmosphärischen Druck abgesenkt ist.

In Fig. 5 befindet sich die Tür 44 in der "Vorrast"-Stellung, d.h., daß die Raste 66 der Schließhilfe 54 einen Stift 68 der Tür 44 erfaßt. Wird nun der Pneumatikzylinder der Schließhilfe 54 mit Druck beaufschlagt, so dreht sich die Raste 66 derart, daß die Tür 44 in Richtung des Kraftfahrzeuges herangezogen wird. Auch in dieser Position weist der Hohlraum 38 einen um etwa $0{,}2 \times 10^5$ Pa gegenüber dem Druck der Umgebung geringeren Innendruck auf.

In Fig. 6 ist die Tür 44 verschlossen. Um in dieser Position bereits eine hinreichende Abdichtung zwischen der Karosserie 42 und der Tür 44 zu erzeugen, wird der Hohlraum 38 belüftet, d.h., so daß in diesem der Druck der Umgebung vorherrscht. Wird nun die Zündung des Kraftfahrzeuges eingestellt, wird der Hohlraum 38 mit einem Druck beaufschlagt, der in etwa $0{,}2 \times 10^5$ Pa höher als der Außendruck liegt, um so die Schlauchdichtung 40 auszudehnen, wodurch eine erhöhte Abdichtung zwischen der Karosserie und der Tür 44 erfolgt. Hierdurch werden Fahrgeräusche vermindert, wodurch der Fahrkomfort des Kraftfahrzeuges wiederum erhöht wird.

## Ansprüche

1. Abdichtung wie Dichtleiste oder Schlauchdichtung mit zumindest einem in dessen Längsrichtung sich erstreckenden Hohlraum für verschließbare Öffnungen von vorzugsweise Fahrzeugen, **dadurch gekennzeichnet,** daß der Druck $p_{ix}$ in dem Hohlraum (14, 16, 18, 26, 30, 38) in gewünschtem Umfang einstellbar ist.

2. Abdichtung nach Anspruch 1, **dadurch gekennzeichnet,** daß der Druck $p_{i1}$ in dem Hohlraum (14, 16, 18, 26, 38) während des Verschließens oder Öffnens der Öffnung kleiner als der atmosphärische Druck ist.

3. Abdichtung nach Anspruch 1, **dadurch gekennzeichnet,** daß bei geschlossener Öffnung der Druck $p_{i2}$ in dem Hohlraum (14, 16, 18, 26, 38) gleich oder in etwa gleich dem atmosphärischen Druck ist.

4. Abdichtung nach Anspruch 1, **dadurch gekennzeichnet,** daß zumindest bei laufendem Kraftfahrzeugmotor der Hohlraum (14, 16, 18, 26, 30, 38) mit einem Überdruck $p_{i3}$ beaufschlagbar ist.

5. Abdichtung nach Anspruch 2, **dadurch gekennzeichnet,** daß der Druck $p_{i1}$ mit $0{,}1 \times 10^5$ Pa $\leq p_{i1} \leq 0{,}3 \times 10^5$ Pa, vorzugsweise $p_{i1} \approx 0{,}2 \times 10^5$ Pa kleiner als der Druck der Umgebung ist.

6. Abdichtung nach Anspruch 3, **dadurch gekennzeichnet,** daß der Druck $p_{i3}$ mit $0{,}1 \times 10^5$ Pa $\leq p_{i2} \leq 0{,}3 \times 10^5$ Pa vorzugsweise $p_{i3} \approx 0{,}2 \times 10^5$ Pa über atmosphärischen Druck liegt.

7. Abdichtung nach Anspruch 1, **dadurch gekennzeichnet,** daß die Abdichtung - (10, 20, 28, 40) entlang des abzudichtenden Bereichs abschnittsweise mit unterschiedlichen Drucken beaufschlagbar ist.

8. Abdichtung wie eine in einem Rahmen einer Kraftfahrzeugtür oder in dieser selbst angeordnete Schlauchdichtung mit zumindest einem in ihrer Längsrichtung verlaufenden Hohlraum, nach zumindest Anspruch 1, **dadurch gekennzeichnet,** daß die Druckeinstellung des Hohlraums (14, 16, 18, 26) von dem B-Holmen der Kraftfahrzeugkarosserie oder von der Scharnierseite der Kraftfahrzeugtür ausgeht.

FIG.1

FIG.2

FIG.3

**FIG.4**

**FIG.5**

## FIG.6

42

58

44

60

52

66

54

56

68

48

50

46

62 64

## FIG.7

42

58

44

60

52

66

54

56

68

48

50

46

62 64